# EUROPEAN PATENT APPLICATION

(11) **EP 3 358 698 A1**
(43) Date of publication of application: **08.08.2018**
(21) Application number: 17154485.1
(22) Date of filing: 02.02.2017
(51) Int. Cl.: H02J 7/00, H02J 7/02, B60L 11/18, H02J 5/00

(54) **BATTERY CHARGING**

(71) Applicant: University of Limerick, Limerick (IE)
(72) Inventor: CONWAY, Thomas, Limerick (IE)
(74) Representative: Appleyard Lees IP LLP

(57) **Abstract**

A charger and related charging methods and systems are provided. The charger comprises: a first conversion module (1a), a second conversion module (1b), an output modulation unit (31); and a switching unit (32) operatively coupled to a switch (2b). The first conversion module (1a) is coupleable to a power source (120) and arranged to output a first charging voltage component (V1) to the output modulation unit (31); the second conversion module (1b) is coupleable to a power source (120) and is arranged to output a second charging voltage component (V2); and the output modulation unit (31) is arranged to receive the first charging voltage component (V1) and to provide a controlled charging output for supply to a battery (110). The switching unit (32) is arranged to operate the switch (2b) to thereby selectively connect the output of the second conversion module (1 b) in series connection with the output of the first conversion module (1a) to add the second charging voltage component (V2) to the first charging voltage component (V1) supplied to the output modulation unit (31).

## Description

### FIELD

The present invention relates to battery charging, including to battery chargers and to methods of supplying power to a battery in order to charge the battery.

### BACKGROUND

Significant development work is taking place to improve the technology in electric vehicles, primarily driven by a desire to reduce pollution associated with use of hydrocarbon fuels for transport. However, a major barrier to widespread uptake of electric vehicles is the relatively restricted vehicle range that is possible using current battery technology. Even with future advances in energy storage capacity of batteries allowing increased range, providing fast and efficient charging will remain important if electric vehicles are to become the norm.

When considering chargers and methods of supplying power to a battery in order to charge the battery, in the field of electric vehicles there are requirements for the apparatus to be low cost for widespread uptake, lightweight if incorporated into vehicles themselves, adaptable to different electrical supplies in locations to which the vehicle may travel, and reliable.

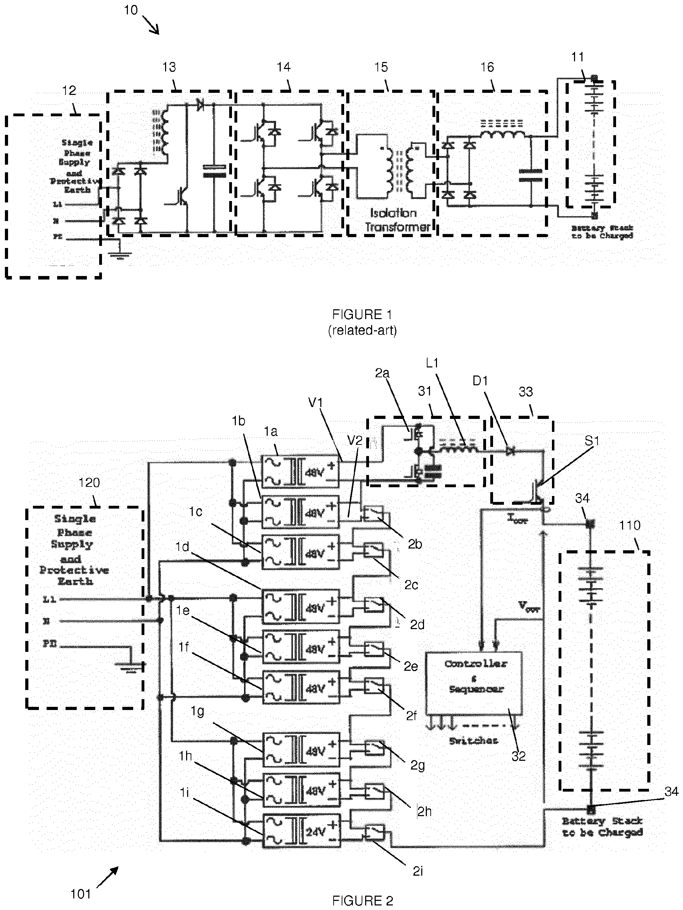

Figure 1 shows a related-art charger 10 for supplying power to a battery 11 in order to charge the battery 11. The charger 10 is fed by a single phase AC source 12, and this feed is rectified and power factor corrected by components on the input side 13. Thereafter, a full bridge inverter 14 is provided, delivering a controlled supply to an isolation transformer 15. The output of the isolation transformer 15 is rectified and smoothed by components on the output side 16 and delivered to the battery 11 as a charging current.

For typical electric vehicle applications, the requirements for the isolation transformer mean that a custom design is needed. Off the shelf components with suitable electrical performance characteristics may be available for the input and output sides, but as will be appreciated these must all be rated to handle the charger's full throughput power. Thus, for a throughput power suitable for electric vehicle charging these components are typically large and heavy.

Example embodiments of the present invention aim to address one or more problems associated with the related-art, whether identified herein, or otherwise.

### SUMMARY

In one example embodiment, the present invention provides a charger comprising: a first conversion module, a second conversion module, an output modulation unit; and a switching unit operatively coupled to a switch; wherein:
the first conversion module is coupleable to a power source and arranged to output a first charging voltage component to the output modulation unit;
the second conversion module is coupleable to a power source and is arranged to output a second charging voltage component;
the output modulation unit is arranged to receive the first charging voltage component and to provide a controlled charging output for supply to a battery; and wherein
the switching unit is arranged to operate the switch to thereby selectively connect the output of the second conversion module in series connection with the output of the first conversion module to add the second charging voltage component to the first charging voltage component supplied to the output modulation unit.

In one example embodiment the output modulation unit comprises a switch, and the switching unit is arranged to operate the switch to control the charging output for supply to the battery .

In one example embodiment the switch comprises part of a second output modulation unit operable to modulate the output of the second conversion module.

In one example embodiment the charger comprises a third conversion module, wherein the third conversion module is coupleable to a power source and is arranged to output a third charging voltage component, and wherein the switching unit is operable to selectively switch the third conversion module in series connection with the first conversion module and the second conversion module to thereby add the third charging voltage component to the first and second charging voltage supplied to the output modulation unit.

In one example embodiment the charger comprises a plurality of additional conversion modules coupleable to a power source and arranged to output a charging voltage component, and wherein the switching unit is operable to selectively switch the additional conversion modules in series connection with the first conversion module and the second conversion module to thereby add additional charging voltage components from the additional conversion modules to the first and second charging voltage components supplied to the output modulation unit.

In one example embodiment the conversion modules comprise swappable units, interchangeable with one another. For example, with standardised electrical connections on the input and/or output sides thereof, between conversion modules, and/or with standardised mechanical connections to the rest of the charger.

In one example embodiment the charger comprises at least one more conversion module than is required to provide a rated charging output for supply to a battery. In one example embodiment the charger comprises one more conversion module than is required to provide a rated charging output for supply to a battery, for example exactly one more conversion module. In another example embodiment the charger comprises exactly two more conversion modules.

A charging system comprising the charger of one of the example embodiments described above, wherein the first conversion module is coupled to a first power source, and the second conversion module is coupled to a second power source.

In one example embodiment the charging system comprises a third conversion module as described above, wherein the third conversion module is coupled to a third power source.

In one example embodiment the first, second and third conversion modules are coupled to power sources comprising different phases of a three phase supply.

In one example embodiment the first conversion module is coupled to a first power source supplied by a spur of domestic supply circuit, and the second conversion module is coupled to a power source supplied by a different spur of a domestic supply circuit.

In one example embodiment the first conversion module is coupled to a first power source supplied by a domestic supply circuit of a first property, and the second conversion module is coupled to a power source supplied by a domestic supply circuit of a second, different property.

In one example embodiment the first conversion module is coupled to a first power source supplied by a supply circuit of a first property, and the second conversion module is coupled to a power source supplied by a supply circuit of a second, different property, the supply circuits of the first and second properties being independently metered.

In one example embodiment the charger comprises an electric vehicle battery charger, and includes a connection unit for coupling to an electric vehicle battery.

In one example embodiment the present invention provides a method for supplying power to a battery in order to charge the battery, the method comprising:
(a) outputting, from a first conversion module, a first charging voltage component to an output modulation unit;
(b) receiving, at the output modulation unit, the first charging voltage component and providing, from the output modulation unit, a controlled charging output for supply to a battery; and
(c) selectively switching a second conversion module into series connection with the first conversion module to thereby add a second charging voltage component to the first charging voltage component supplied to the output modulation unit.

In one example the method comprises selectively switching the second conversion module to add a modulated second charging voltage component to the first charging voltage component supplied to the output modulation unit.

In one example embodiment the method comprises interrupting the charging output before switching the second conversion module into series connection with the first conversion module. In one example embodiment the method comprises switching the second conversion module into series connection with the first conversion module under no load conditions.

In one example the method comprises the step of selectively switching a third conversion module into series connection with the first and second conversion modules to thereby add a third charging voltage component to the first and second charging voltage components supplied to the output modulation unit.

In one example the method comprises the step of detecting the battery voltage and selectively switching sufficient conversion modules into series such that the output modulation unit is able to supply a controlled charging output at a higher greater voltage than the detected battery voltage. In one example the step of detecting the battery voltage is performed before commencement of providing the controlled charging output. In one example embodiment the step of detecting the battery voltage is performed as part of a feedback control system used to control the charging output.

In one example embodiment the method comprises the step of detecting the current supplied to the battery and as part of a feedback control system used to control the charging output. In one example the method comprises the step of detecting the current supplied to the battery and selectively switching sufficient conversion modules into series such that the output modulation unit is able to supply a controlled charging output at constant current as the battery voltage increases during charging.

In one example the method comprises detecting battery voltage and charging current as part of a feedback control system for the output modulation unit, by which constant current constant voltage charging is performed.

In one example the method comprises coupling the first conversion module to a first power source and coupling the second conversion module to a second power source. In one example embodiment the charging system comprises a third conversion module as described above, and the method comprises coupling wherein the third conversion module is coupled to a third power source.

In one example embodiment the method comprises coupling the first, second and third conversion modules to power sources that comprise different phases of a three phase supply.

In one example embodiment the method comprises coupling the first conversion module to a first power source supplied by a spur of domestic supply circuit, and coupling the second conversion module to a power source supplied by a different spur of a domestic supply circuit.

In one example embodiment the method comprises coupling the first conversion module to a first power source supplied by a domestic supply circuit of a first property, and coupling the second conversion module to a power source supplied by a domestic supply circuit of a second, different property.

In one example embodiment the method comprises coupling the first conversion module to a first power source supplied by a supply circuit of a first property, and coupling the second conversion module to a power source supplied by a supply circuit of a second, different property, the supply circuits of the first and second properties being independently metered.

In one example embodiment the charger comprises an electric vehicle battery charger that includes a connection unit for coupling to an electric vehicle battery, and the method comprises coupling the charger to an electric vehicle battery using the connection unit.

According to the present invention there is provided an apparatus and method as set forth in the appended independent claims. Other features of the invention will be apparent from the dependent claims, and the description which follows.

### BRIEF DESCRIPTION OF DRAWINGS

For a better understanding of the invention, and to show how embodiments of the same may be carried into effect, reference will now be made, by way of example, to the accompanying diagrammatic drawings in which:
Figure 1 shows a related-art charger for supplying power to a battery in order to charge the battery;
Figure 2 shows a charger according to a first example embodiment, coupled to a single phase supply;
Figure 3 shows a charger according to a second example embodiment, coupled to a three phase supply;
Figure 4 shows a charger according to a third example embodiment, coupled to a plurality of independent single phase supplies;
Figure 5 shows a charging system according to a further example embodiment; and
Figure 6 shows a method of charging according to a still further example embodiment.

### DESCRIPTION OF EXAMPLE EMBODIMENTS

Figure 2 shows a charger 101 according to a first example embodiment. The charger 101 comprises a first conversion module 1a, a second conversion module 1b, and third through ninth conversion modules 1c-1i. The charger 101 further comprises an output modulation unit 31; and a switching unit 32 operatively coupled to a switch 2b. At the input side of the charger 101 there is power source 120 which is coupled to the conversion modules 1a-1i, which in this embodiment comprises a single phase supply with a connection for a protective earth. At the output side of the charger 101 is a battery 110, which in this embodiment comprises an electric vehicle battery that is coupled to the charger 101 at a connection unit 34.

The first conversion module 1a is arranged to output a first charging voltage component to the output modulation unit 31, as is the second conversion module 1b , which is arranged to output a second charging voltage component V2 and so on for third and further conversion modules 1c-1i.

The output modulation unit 31 receives the first charging voltage component V1 and provides a controlled charging output for supply to a battery 110 at the connection unit 34. The output modulation unit 31 comprises a switch 2a operated under control of the switching unit 32 to control the charging output for supply to the battery 110. In this embodiment the output modulation unit 31 comprises a switch 2a provided as a MOSFET half bridge, feeding a series inductor L1.

When the first charging voltage component V1, as modulated by the output modulation unit 31, is no longer sufficiently high to drive charge into the battery 110, the voltage at the connection unit 34 is increased by the action of control of the switching unit 32. The switching unit 32 is arranged to operate the switch 2b to thereby connect the output of the second conversion module 1b in series connection with the output of the first conversion module 1a, to add the second charging voltage component V2 to the first charging voltage component V1 supplied to the output modulation unit 31.

In this way, the battery charger 101 can operate with a single output modulation unit 31 to regulate the charging voltage over a wide range.

Furthermore, use of a plurality of conversion modules 1a-1 i to each produce a fraction of the voltage supplied to the output modulation unit 31 brings considerable advantages. Firstly, it eliminates the need for input side components rated to the full throughput power. Secondly, it enables existing, highly optimised conversion modules with efficient transformers to be used. Conversion modules with suitable electrical and physical characteristics, high reliability and suitable regulatory approvals are available, for use as stand-alone power supplies in other fields such as data centres and server farms. Thirdly, the battery charger 101 can be made resilient to partial failure, and easy to repair on a modular basis by enabling replacement of any one of the conversion modules, independently of the others.

In the example embodiment of Figure 2, each of the first through eighth conversion modules 1a-1h comprises a 240V ac nominal input and a 48V dc nominal output. The ninth conversion module 1i comprises a 240V ac nominal input and a 24V dc nominal output.

With only the first conversion module 1a of Figure 2 providing its output to the output modulation unit 31, a charging output in the range 0V to 48V dc can be supplied to the battery 110 by pulse width modulation operation of the switch 2a in the output modulation unit 31, under control of the switching unit 32.

As is shown in Figure 2, the voltage as supplied to the battery 110 is sensed by the switching unit 32 as Vout, and is useful in control of the charger 101. Also shown in Figure 2 are protection devices 33 in the form of a diode D1 to prevent damage by reverse polarity connection at the connection unit 34, and in the form of an isolation switch S1 which is operated by the switching unit 32 in the event of an over current condition being sensed for lout, or indeed an over voltage condition for Vout. The isolation switch S1 in the embodiment of Figure 2 is provided as an IGBT.

As Vout approaches 48V dc, the switching unit 32 operates the switch 2b to thereby connect the output of the second conversion module 1b in series connection with the output of the first conversion module 1a, to add the second charging voltage component V2, enabling up to a nominal maximum Vout of 96V dc to be delivered to the battery 110.

By operation of the switches 2b through 2i, voltage values of 0, 24, 48, 72, 96, 120, 144, 168, 192, 216, 240, 264, 288, 312, 336 or 360 V dc can be added as the second voltage component, so in combination with the first voltage component a total of 408V dc is available for PWM modulation in the output modulation unit 31. That is, the plurality of additional conversion modules 1b-1c are coupled to the power source 120 and each can output a charging voltage component. The switching unit 32 operates to selectively switch the additional conversion modules 1b-1i in series connection with the first conversion module 1a, either individually or together as parts of a group, to thereby add additional charging voltage components V2-V9 from the additional conversion modules 1b-1i to the first charging voltage component V1 supplied to the output modulation unit 31 by the first conversion module 1a.

When the switching unit 32 determines that it is time to operate one of the switches 2b-2i to enable an increase of Vout, it first is arranged to operate the output modulation unit 31 so that the additional conversion module is switched into the circuit under no load conditions. A short interruption to the charging current lout is provided by operation of the isolation switch S1, but this feature is advantageous in that relatively lower cost switches, for example relay switches, can be used with little impact on reliability of the charger 101 and negligible impact on charging performance.

The switching unit 32 is further configured to detect the current supplied to the battery 110, lout, for use in control of the charger 101 during charging. In the example embodiment of Figure 2 the switching unit 32 detects lout as part of a feedback control system used to regulate the charging output. By detecting the current supplied to the battery 110 as it charges, and selectively switching sufficient conversion modules 1b-1i into series, the switching unit 32 controls that the output modulation unit 31 to supply a controlled charging output at constant current as the battery voltage increases during charging. The constant current is determined according to the requirements of the battery 110 being charged, typically with a constant current constant voltage charging regime specified for optimum charging.

In the example embodiment of Figure 2, the configuration of the output modulation 31 unit as a MOSFET bridge switch 2a and series inductor L1 will lead to some output ripple in the charging current. However, with a relatively high PWM switching frequency and modulation within only a 48V range maximum, the requirements for the output modulation components are easily met with a relatively small inductor and lower voltage MOSFETs. As will be appreciated, other forms of output modulation unit may be used in other example embodiments.

Another feature of the switching unit 32 as shown in Figure 2 is in determining the initial conditions for charging and operating the switches 2a-2i appropriately, in cases where the initial battery voltage is not 0V. On detection of a battery 110 being coupled to the connection unit 34 the switching unit 32 is arranged to detect the battery voltage and to selectively switch sufficient of the conversion modules 1b-1i into series with the first conversion module 1a such that the output modulation unit 31 is able to supply a controlled charging output at a greater voltage Vout than the detected battery voltage.

In the example embodiment of Figure 2 the switching unit 32 is advantageously configured to operate the same procedure on commencement of charging as for the switching-in of additional conversion modules. For example, with an initial battery voltage of 350V, the switches 2b-2i are configured so charging can start with the output modulation unit 31 supplying an output voltage in the range 336V to 384V. This is provided with the top eight conversion modules 1a-1h contributing their voltage components. As the battery voltage approaches 384V the final conversion module is switched into operation, by first isolating the battery 110 using the isolation switch provided as one of the protection devices 31, and then operating the switch 2i under no load before recommencement of supply of the charging current through the isolation switch.

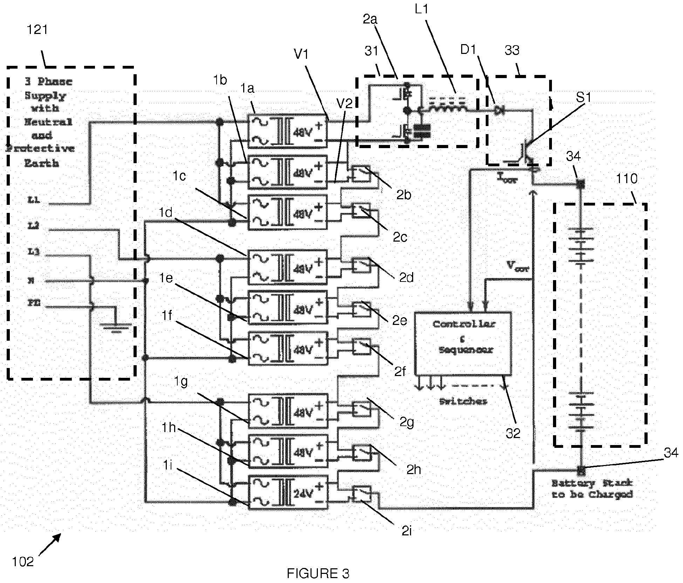

Figure 3 shows a charger 102 according to a second example embodiment, coupled to a three phase supply 121. At the input side of the charger 102 there is power source 121 which in this embodiment comprises a three phase supply with neutral and a protective earth, for connection to the conversion modules 1a-1i. In this example embodiment the conversion modules 1a-1i are configured into three groups, with each group being coupled to one of the three phases of the power source 121. It will be understood that various configurations are possible for two or three phase supplies, with the connections/groupings of the conversion modules made as appropriate. The other components of Figure 3 correspond to those of Figure 2, so a detailed description thereof is omitted.

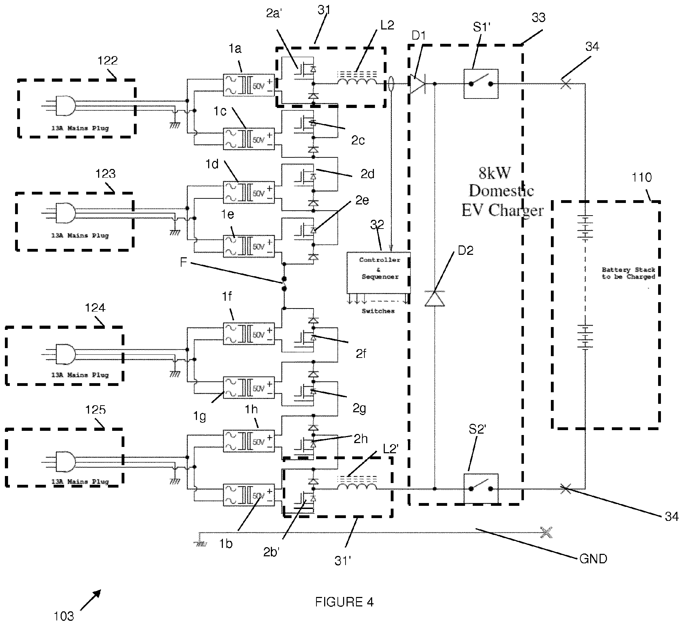

Figure 4 shows a charger 103 according to a third example embodiment. The charger 103 of Figure 4 is coupled to first through fourth independent power sources 122-125. Each of the power sources 122-125 comprises an independent single phase supply with protective earth. In the charger 103 of Figure 4, the each of the power sources 122-125 is coupled to two of the conversion modules 1a-1h, and each of the power sources 122-125 corresponds to a different spur on a domestic supply circuit. In this way a higher charging output power may be delivered to the battery 110 than would be possible based on the maximum capacity of each individual spur. For example, if each spur in the domestic supply circuit is rated at 240V and 13A maximum current the use of four spurs makes it possible to supply eight 1kW conversion modules at around 9A per spur.

In the charger 103 of Figure 4 there are some additional differences over those of Figures 2 and 3, in particular relating to the switches 2, and the protection components 33.

In the charger 103 of Figure 4 the switches 2 are provided as solid state devices, each comprising a MOSFETs and a series diode. The switches 2 are arranged between the output terminals of each conversion module 1a-1h, with the diodes orientated such that the combined voltage increases towards the top of the circuit as shown, according to whether the MOSFETs are conducting. In this way any combination of second and subsequent conversion module 1b-1h may be selectively switched into the circuit to add its output voltage to that of the first conversion module 1a to provide a combined voltage to the output modulation unit 31 at the top of the circuit.

Another difference in this embodiment relates to the second switch 2b'. The second switch 2b' is provided as part of a second output modulation unit 31'. The second output modulation unit 31' is operable to modulate the output of the second conversion module 1 b.

By providing two output modulation units 31,31' it is possible to reduce switching losses overall, as the power consumption in the semiconductor switches, here both MOSFETs, and in the associated smoothing inductors L2, L2' of the output modulation units 31,31' can be reduced.

The protection components 33 in this embodiment comprise and additional diode D2 to enforce correct polarity at the connection unit 34, and isolation switches S1',S2', one for each of the positive and negative terminals of the connection unit 34. As above, the isolation switches S1',S2' are operatively coupled to the switching unit 32 to be controlled by the switching unit 32 and voltage feedback (not shown) is used by the switching unit 32 with the sensed lout to set the initial conditions for charging the battery 110, to monitor progress of a charging operation and to fail safe in the event of unexpected over voltage or over current conditions. A common ground GND is also shown, and a fuse F provided between conversion modules 1e and 1f, providing a degree of protection between the upper and lower halves of the charger 103, in particular the components supplied by the first and second power sources 122,123 to the upper half and the components supplied by the third and fourth power sources 124,125 to the lower half.

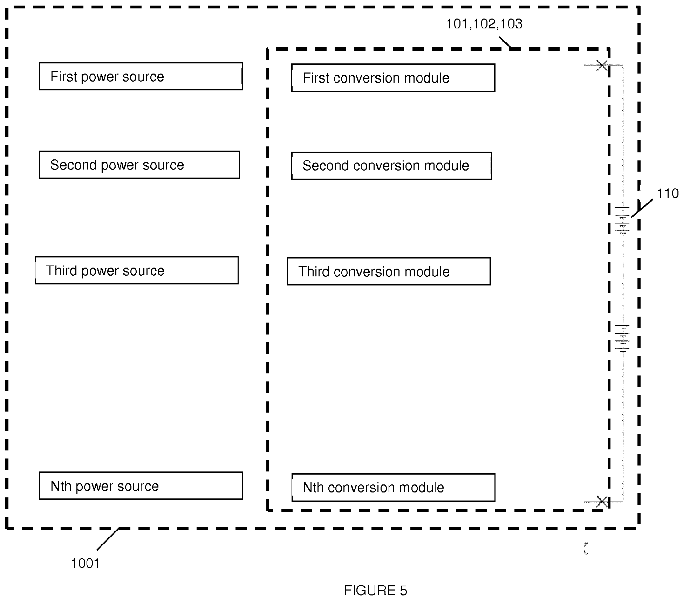

Figure 5 shows a charging system 1001 according to another example embodiment. The charging system 1001 comprises a charger 101,102,103 in accordance with one of the example embodiments described above. The first conversion module is coupled to a first power source, and the second conversion module is coupled to a second power source.

The charging system 1001 further comprises third through nth conversion modules as described above, wherein the third through nth conversion modules coupled to third through nth power sources respectively.

The first, second and third conversion modules could for example be coupled to power sources comprising different phases of a three phase supply, with the charger corresponding to that shown in Figure 3. Alternatively the first conversion module may be coupled to a first power source supplied by a spur of domestic supply circuit, and the second conversion module to a power source supplied by a different spur of a domestic supply circuit, with the charger corresponding to that shown in Figure 4. By extension, as well as power sources supplied from different spurs of one domestic supply, other embodiments of the charging system may comprise a first conversion module coupled to a first power source supplied by a domestic supply circuit of a first property, and a second conversion module coupled to a power source supplied by a domestic supply circuit of a second, different property.

Similar considerations apply to the third through nth conversion units and power sources, according to the availability of power supplies of the different types described herein. In the embodiment of Figure 5 the switching, modulation and control of the charging output to the battery 110 is as described for the example embodiments above.

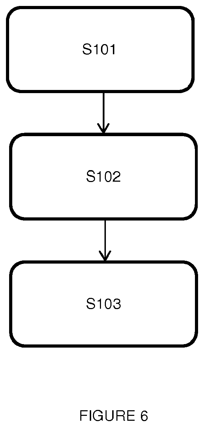

Figure 6 shows a method of charging according to an example embodiment.

The method comprises the steps: outputting, from a first conversion module, a first charging voltage component to an output modulation unit S101; receiving, at the output modulation unit, the first charging voltage component and providing, from the output modulation unit, a controlled charging output for supply to a battery S102; and selectively switching a second conversion module into series connection with the first conversion module to thereby add a second charging voltage component to the first charging voltage component supplied to the output modulation unit S103.

Variations and additional steps within the scope of the method and in accordance with the operations described for the switching unit 32 and the components under its control will be briefly described in the following paragraphs.

In one example the method comprises selectively switching the second conversion module to add a modulated second charging voltage component to the first charging voltage component supplied to the output modulation unit, and also involves selectively switching a third conversion module into series connection with the first and second conversion modules to thereby add a third charging voltage component to the first and second charging voltage components supplied to the output modulation unit.

In one example the method comprises coupling the first conversion module to a first power source and coupling the second conversion module to a second power source to produce a charging system as described above. In one example embodiment the charging system comprises a third conversion module as described above, and the method comprises coupling the third conversion module to a third power source, for example by coupling to first, second and third phases of a three phase supply.

The apparatus and methods described herein are particularly advantageous when employed in charging batteries for electric vehicles. In one example embodiment the charger comprises an electric vehicle battery charger that includes a connection unit for coupling to an electric vehicle battery, and optionally further includes said electric vehicle battery. The charger according to the example embodiments and battery may comprise components within an electric vehicle, and vehicles of this type are also within the scope of this disclosure, comprising example embodiments of the invention.

Although a few example embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive. The method steps describe may where appropriate be recorded on a computer readable recording medium such that when reproduced on a suitable apparatus the methods are performed, and said computer readable recording medium accordingly comprises an embodiment of the present invention.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A charger comprising:
a first conversion module (1a), a second conversion module (1b), an output modulation unit (31); and a switching unit (32) operatively coupled to a switch (2b); wherein:
the first conversion module (1a) is coupleable to a power source (120) and arranged to output a first charging voltage component (V1) to the output modulation unit (31);
the second conversion module (1b) is coupleable to a power source (120) and is arranged to output a second charging voltage component (V2);
the output modulation unit (31) is arranged to receive the first charging voltage component (V1) and to provide a controlled charging output for supply to a battery (110); and wherein
the switching unit (32) is arranged to operate the switch (2b) to thereby selectively connect the output of the second conversion module (1 b) in series connection with the output of the first conversion module (1a) to add the second charging voltage component (V2) to the first charging voltage component (V1) supplied to the output modulation unit (31).

2. A charger according to claim 1, wherein the output modulation unit (31) comprises a switch (2a), and the switching unit (32) is arranged to operate the switch (2a) to control the charging output for supply to the battery (110).

3. A charger according to claim 1 or 2, wherein the switch (2b') comprises part of a second output modulation unit (31') operable to modulate the output of the second conversion module (1 b).

4. A charger according to claim 1, 2 or 3, comprising a plurality of additional conversion modules (1c-1i) coupleable to a power source (120) and arranged to output a charging voltage component, and wherein the switching unit (32) is operable to selectively switch the additional conversion modules (1c-1i) in series connection with the first conversion module (1a) and the second conversion module (1 b) to thereby add additional charging voltage components (V3-V9) from the additional conversion modules (1c-1i) to the first and second charging voltage components (V1+V2) supplied to the output modulation unit (31).

5. A charger according to any preceding claim, wherein the conversion modules comprise swappable units, interchangeable with one another.

6. A charger according to any preceding claim, wherein the charger comprises one more conversion module than is required to provide a rated charging output for supply to a battery (110).

7. A method for supplying power to a battery in order to charge the battery, the method comprising:
outputting, from a first conversion module, a first charging voltage component to an output modulation unit (S101);
receiving, at the output modulation unit, the first charging voltage component and providing, from the output modulation unit, a controlled charging output for supply to a battery (S102); and
selectively switching a second conversion module into series connection with the first conversion module to thereby add a second charging voltage component to the first charging voltage component supplied to the output modulation unit (S103).

8. A method according to claim 7, comprising selectively switching the second conversion module to add a modulated second charging voltage component to the first charging voltage component supplied to the output modulation unit.

9. A method according to claim 7, comprising interrupting the charging output before switching the second conversion module into series connection with the first conversion module, to thereby switch the second conversion module into series connection with the first conversion module under no load conditions.

10. A method according to claim 7, 8 or 9, comprising the step of step of detecting the battery voltage and selectively switching sufficient conversion modules into series such that the output modulation unit is able to supply a controlled charging output at a higher greater voltage than the detected battery voltage, said step of detecting the battery voltage being performed before commencement of providing the controlled charging output.

11. A method according to any one of claims 7 through 10, wherein the step of detecting the battery voltage is performed as part of a feedback control system used to control the charging output, the method comprises the step of detecting the current supplied to the battery, and further comprises selectively switching sufficient conversion modules into series such that the output modulation unit is able to supply a controlled charging output at constant current as the battery voltage increases during charging.

12. A method according to any one of claims 7 through 11, comprising the steps of: coupling the first conversion module to a first power source; and coupling the second conversion module to a second power source.

13. A method according to any one of claims 7 through 12, comprising the steps of: coupling the first conversion module to a first power source supplied by a spur of domestic supply circuit; and coupling the second conversion module to a power source supplied by a different spur of a domestic supply circuit.

14. A method according to any one of claims 7 through 12, comprising the steps of: coupling the first conversion module to a first power source supplied by a supply circuit of a first property; and coupling the second conversion module to a power source supplied by a supply circuit of a second, different property, the supply circuits of the first and second properties being independently metered

15. A method according to any one of claims 7 through 14, performed using a charger according to any one of claim 1 through 6.
